# EUROPÄISCHE PATENTSCHRIFT

(11) **EP 1 059 553 B1**
(45) Veröffentlichungstag und Bekanntmachung des Hinweises auf die Patenterteilung: **29.06.2005**
(21) Anmeldenummer: 99810500.1
(22) Anmeldetag: 07.06.1999
(51) Int. Cl.: G02C 7/08

(54) **Brille mit Lupen**
Spectacles with magnifying lenses
Lunettes avec loupes

(43) Veröffentlichungstag der Anmeldung: 13.12.2000
(73) Patentinhaber: GRENDELMEIER, Alexander, CH-4663 Aarburg (CH)
(72) Erfinder: Grendelmeier, Alexander, 4663 Aarburg (CH); Grendelmeier, Beat, 4663 Aarburg (CH); Grendelmeier, Gertrud, 4663 Aarburg (CH); Grendelmeier, Felix, 4663 Aarburg (CH)
(74) Vertreter: BOVARD AG - Patentanwälte

(56) Entgegenhaltungen:
- DE-A- 4 004 248
- DE-B- 1 276 363
- DE-C- 650 682
- DE-U- 9 303 663
- US-A- 4 429 959
- US-A- 5 129 717
- US-A- 5 499 064

## Beschreibung

Die vorliegende Erfindung bezieht sich auf eine Brille mit Lupen gemäss dem Oberbegriff des Patentanspruchs 1.

Derartige Brillen, die vorzugsweise mit zwei Lupen ausgestattet sind, werden insbesondere von Personen getragen, die Tätigkeiten in einem Tätigkeitsfeld ausüben, das vergrössert eingesehen werden soll. Derartige Tätigkeiten werden insbesondere in medizinischen, feinmechanischen und elektronischen Bereichen ausgeübt. Diese Lupen sind als Objektive ausgebildet, die durch Haltemittel an einer Brille befestigt sind.

Eine bekannte Ausführungsform zeigt eine derartige Brille, auf deren Brillengestell ein Tragmechanismus befestigt ist, der einen quer verlaufenden Tragarm aufweist, an deren Enden die Lupen befestigt sind, so dass sie vor die Pupille des jeweiligen Auges zu stehen kommen.

Diese Vorrichtungen sind kompliziert und behindern durch die erforderlichen Tragelemente, die sich im Gesichtsfeld des Trägers befinden, die freie Sicht. Es sind Mechanismen zum Einstellen der Lupen erforderlich, die aufwendig in der Herstellung und zum Bedienen sind.

Es sind auch Brillen bekannt, bei welchen die in Objektiven angeordneten Lupensysteme auf die Brillengläser aufgeklebt werden. Dadurch ergibt sich gegenüber den obengenannten Einrichtungen der Vorteil, dass die Sicht des Trägers dieser Brille nicht noch durch zusätzliche Tragelemente eingeschränkt ist. Nachteilig ist aber, dass die Aufklebung der die Lupensysteme enthaltenden Objektive für jeden Träger von derartigen Brillen individuell erfolgen muss, da der interpupillare Abstand von Mensch zu Mensch unterschiedlich ist. Somit muss die Herstellung für jeden Träger individuell erfolgen, was sehr aufwendig ist.

Bei diesen vorbekannten Brillen mit Lupen können Brillen verwendet werden, die unkorrigierte Brillengläser verwenden, es können aber auch Brillen verwendet werden, in welchen Sehfehler korrigierende Gläser eingesetzt sind. Bei beiden oben genannten vorbekannten Brillen mit Lupen können diese Lupen so ausgerichtet werden, dass sich die Lupenachsen in einem Abstand von den Augen schneiden, welcher der Distanz des Tätigkeitsfeldes von den Augen entspricht.

Aus der DE-A 40 04 248 ist eine einstellbare Sehhilfe entnehmbar, welche mit verschiebbaren Lupen ausgestaltet ist, wobei in einer Stellung der Lupen eine Femsicht und in der anderen Stellung ein Sehen in kurze Entfernungen ermöglicht wird. Eine Einstellung der Lupen auf verschiedene interpupillare Abstände ist nicht vorgesehen.

Die Aufgabe der Erfindung besteht nun darin, eine Brille mit Lupen so zu gestalten, dass der gegenseitige Abstand der Lupen der interpupillaren Distanz des jeweiligen Trägers in einfacher Weise angepasst werden kann, und dass die Lupen auch in einfacher Weise ausgetauscht werden können.

Erfindungsgemäss erfolgt die Lösung dieser Aufgabe durch die im Anspruch 1 angegebenen Merkmale.

Mit dieser erfindungsgemässen Lösung kann der Lupenabstand an die interpupillare Distanz eines Trägers dieser Brille angepasst werden. Die Länge der schlitzförmigen Ausnehmung kann so gewählt werden, dass praktisch der gesamte Bereich, innerhalb welchem sich interpupillare Abstandswerte bewegen, abgedeckt ist. Es ist auch denkbar, die Anordnung und die Länge der schlitzförmigen Ausnehmungen so zu gestalten, dass ein erster Typ für Träger vorgesehen ist, die einen kleinen interpupillaren Abstand haben, dass ein zweiter Typ für Träger vorgesehen sein kann, die einen mittleren interpupillaren Abstand haben, und dass ein dritter Typ für Träger vorgesehen sein kann, die einen grossen interpupillaren Abstand haben. Das Klemmittel ist hierbei durch einen Flansch und einen Gewindeteil gebildet, wobei im auf das transparente Element aufgesetzten Zustand der Flansch auf der einen Seite dieses transparenten Elementes abgestützt ist und der Gewindeteil durch die schlitzförmige Ausnehmung hindurchragt. Auf den Gewindeteil lässt sich dann eine Schraubenmutter aufschrauben, die auf der anderen Seite des transparenten Elementes abgestützt ist, wodurch sich der Flansch gegen das transparente Element pressen lässt, und somit eine klemmende Halterung erreicht wird. Diese Ausführung ist einfach in der Herstellung und in der Bedienung.

In vorteilhafter Weise ist der Flansch und der Gewindeteil als hülsenförmiges Element ausgebildet, das mit einer durchgehenden Bohrung ausgestattet ist, in welche die Lupe einsetzbar ist. Dadurch lässt sich die Lupe in einfacher Weise auswechseln, insbesondere wenn die Lupe in die Bohrung eingesteckt und durch Reibung gehalten ist.

Eine weitere vorteilhafte Ausgestaltung der Erfindung besteht darin, dass koaxial in das erste hülsenförmige Element ein weiteres hülsenförmiges Element eingesetzt ist, das um eine Drehachse verdrehbar ist, und im weiteren hülsenförmigen Element eine weitere durchgehende Bohrung angebracht ist, in welche die Lupe eingesetzt ist, wobei die Achse der Bohrung bezüglich der Drehachse um einen Winkel α geneigt ist. Die Lupe kann dann die Form eines Zylinders haben, dessen Achse mit der Lupenachse zusammenfällt, was die Verwendung von einfachen Lupen ermöglicht, die Einstellung der Lupenachse kann dann durch Verdrehen des weiteren hülsenförmigen Elementes bezüglich des ersten hülsenförmigen Elementes erfolgen.

Zur Vereinfachung und genaueren Einstellung dieser Verdrehung des weiteren hülsenförmigen Elementes bezüglich des hülsenförmiges Elementes kann ein Verdrehmechanismus vorgesehen sein. Gleichzeitig kann eine Arretiereinrichtung angebracht sein, die ein Arretieren des Verdrehens ermöglicht.

In vorteilhafter Weise ist die Lupe in Richtung ihrer Längsachse bezüglich des transparenten Elementes verschiebbar. Dadurch lässt sich der Abstand der Lupe vom Auge in optimaler Weise einstellen.

Die schlitzförmigen Ausnehmungen zur Aufnahme der Lupen können in zwei am Brillengestell befestigbaren Brillengläsern angebracht werden, sie können aber auch an einem Schutzschild angebracht werden, der auf das Brillengestell aufsetzbar ist. Dieser mit Lupen versehene Schutzschild kann auf ein Brillengestell aufgesetzt werden, das keine zusätzlichen Brillengläser aufweist, er kann aber auch auf ein Brillengestell aufgesetzt werden, in welches bereits Brillengläser eingesetzt sind. Der Schutzschild mit den darin eingesetzten Lupen kommt dann vor diese Brillengläser zu liegen. Bei Nichtgebrauch der Lupen kann dadurch der Schutzschild mit den Lupen von diesem mit Brillengläsern versehenen Brillengestell abgenommen werden, der Träger trägt dann eine normale Brille, wobei die Brillengläser sehfehlerkorrigierende Brillengläser sein können.

Ausführungsformen der vorliegenden Erfindung werden nachfolgend mit Bezugnahme auf die beiliegende Zeichnung beispielhaft näher erläutert.

Es zeigt:
Fig. 1 eine Draufsicht auf ein Brillengestell mit aufgesetztem Schutzschild und in diesen Schutzschild gehaltenen Lupen, wobei linksseitig eine erste Ausführungsform eines Haltemittels und rechtsseitig eine zweite Ausführungsform eines Haltemittels jeweils im Schnitt dargestellt ist;
Fig. 2 eine Ansicht auf die Brille gemäss Fig. 1 mit den schlitzförmigen Ausnehmungen im Schutzschild und schematisch angedeuteten Haltemitteln;
Fig. 3 eine Ansicht auf die Brille gemäss Fig. 1, wobei linksseitig die Lupe weggelassen ist, während rechtsseitig ein Schnitt entlang Linie III-III gemäss Fig. 1 dargestellt ist, ebenfalls mit weggelassener Lupe;
Fig. 4 in vergrösserter Darstellung die in Fig. 1 rechtsseitig dargestellte Ausführungsform eines Haltemittels;
Fig. 5 in vergrösserter Darstellung die in Fig. 1 linksseitig dargestellte Ausführungsform eines Haltemittels;
Fig. 6 eine Ansicht auf eine Brille, bei welcher die schlitzförmigen Ausnehmungen in die in das Brillengestell eingesetzten Brillengläser eingelassen sind; und
Fig. 7 eine Ansicht von oben auf eine Brille mit eingesetzten Brillengläsern und einem aufgesetzten Schutzschild, wobei die Lupe im Schutzschild angebracht ist.

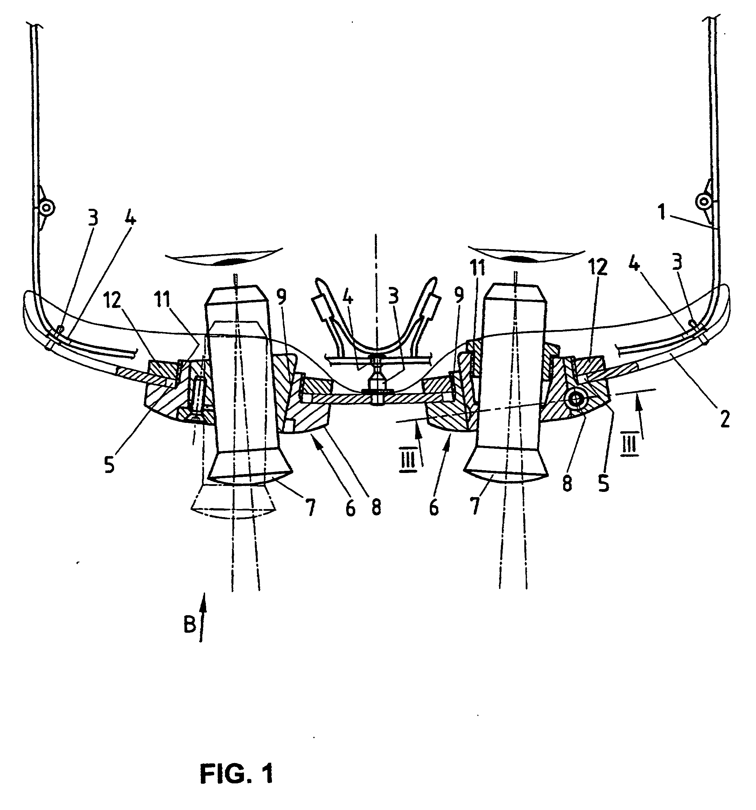

In Fig. 1 ist ein Brillengestell 1 dargestellt, in welches ein transparentes Element eingesetzt ist, das als Schutzschild 2 ausgebildet ist. Dieser Schutzschild 2 ist in einfacher und bekannter Weise am Brillengestell 1 befestigbar, wozu drei am Schutzschild 2 befestigte Stifte 3 vorgesehen sind, die in entsprechende Öffnungen 4 im Brillengestell gehalten sind. Mit dieser Befestigungsvorrichtung ist der Schutzschild 2 in einer vorgegebenen Position und praktisch spielfrei mit dem Brillengestell 1 verbunden.

In den Schutzschild 2 sind im Bereich der Augen eines diese Brille tragenden Trägers zwei schlitzförmige Ausnehmungen 5, die durchgehend im Schutzschild 2 angebracht sind, vorgesehen. In diese schlitzförmigen Ausnehmungen 5 ist jeweils ein Haltemittel 6 eingesetzt, welche jeweils eine Lupe 7 tragen.

Beide Haltemittel 6 umfassen ein erstes hülsenförmiges Element 8, das mit einer durchgehenden Bohrung 9 versehen ist. Jedes erste hülsenförmige Element weist einen Flansch 10 auf, an welchen ein Gewindeteil 11 anschliesst. Das erste hülsenförmige Element 8 ist in die schlitzförmige Ausnehmung 5 eingesetzt, wodurch der Flansch 10 auf der äusseren Oberfläche des Schutzschildes 2 abgestützt wird. Auf den Gewindeteil 11 ist eine Schraubenmutter 12 aufgeschraubt, die sich auf der inneren Oberfläche des Schutzschildes 2 abstützt.

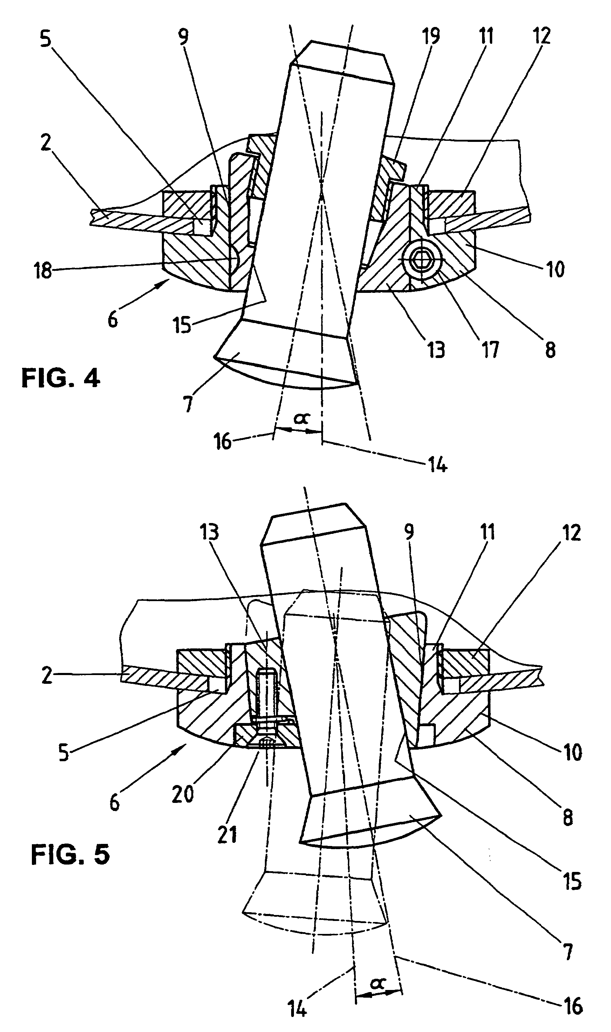

Diese beiden Halterungen 6 sind in den Fig. 4 und 5 vergrössert dargestellt und werden im Detail mit Bezugnahme auf diese beiden Figuren näher beschrieben. Wie bereits erwähnt, wird das erste hülsenförmige Element 8 mittels Flansch 10 und der auf den Gewindeteil 11 aufgeschraubten Schraubenmutter 12 im Schutzschild 2 klemmend gehalten. In vorteilhafter Weise sind die Oberflächen von Flansch 10 und Schraubenmutter, die auf dem transparenten Element abgestützt sind, an die Wölbung dieses Elementes angepasst. Denkbar wäre auch, dass entsprechende Zwischenlagen vorgesehen sind.

In die Bohrung 9 des ersten hülsenförmigen Elementes 8 ist ein weiteres hülsenförmiges Element 13 eingesetzt. Dieses weitere hülsenförmige Element 13 ist um eine Drehachse 14 verdrehbar gehalten. Dieses weitere hülsenförmige Element 13 ist mit einer weiteren durchgehenden Bohrung 15 versehen, deren Achse 16 bezüglich der Drehachse 14 um einen Winkel α geneigt ist. In diese weitere Bohrung 15 ist die Lupe 7 eingesetzt, wobei die Lupenachse mit der Achse 16 der weiteren Bohrung 15 zusammenfällt.

Die Ausführungsform einer Halterung 6 gemäss Fig. 4, die in der Fig. 1 auf der rechten Seite dargestellt ist, weist einen Verdrehmechanismus auf, der durch ein Schneckengetriebe gebildet ist, bestehend aus einer im ersten hülsenförmigen Element gelagerten Schraube 17, die mit einem am Umfang des weiteren hülsenförmigen Elementes angebrachten Gewinde 18 kämmt. Durch Verdrehen der Schraube lässt sich somit das weitere hülsenförmige Element 13 bezüglich des ersten hülsenförmigen Elementes 8 um die Drehachse 14 verdrehen. Die Achse 16, die mit der Lupenachse zusammenfällt, beschreibt bei der vollen Umdrehung des weiteren hülsenförmigen Elementes eine Kreisbahn.

In der Ausführungsform gemäss Fig. 4 ist am innenseitigen Ende des weiteren hülsenförmigen Elementes eine Spannschraube 19 angebracht, mit welcher in bekannter Weise die Lupe 7 im weiteren hülsenförmigen Element 13 hinsichtlich einer möglichen längsverschieblichen Bewegung fixieren lässt.

In einer weiteren Ausführungsform der Halterung 6, wie sie in Fig. 5 dargestellt ist, und die in Fig. 1 auf der linken Seite angeordnet ist, weist die Bohrung 9 des ersten hülsenförmigen Elementes 8 eine kegelige Oberfläche auf. Entsprechend ist die äussere Oberfläche des weiteren hülsenförmigen Elementes 13 ausgebildet, das in diese Bohrung 9 eingesetzt ist. Mittels eines Plättchens 20, das über eine Schraube gegen das weitere hülsenförmige Element 13 spannbar ist, und das sich auf dem ersten hülsenförmigen Element 8 abstützt und an der Lupe 7 anliegt, lässt sich das weitere hülsenförmige Element 13 in die kegelige Bohrung 9 hineinziehen und verklemmen, wodurch gleichzeitig die Lupe 7 fixiert ist. Im gespannten Zustand lässt sich somit das weitere hülsenförmige Element 13 nicht mehr bezüglich des ersten hülsenförmigen Elementes 8 verdrehen, die Lupe 7 kann in diesem Zustand auch nicht mehr in Längsrichtung verschoben werden.

Obwohl in Fig. 1 zwei Halterungen 6 für die Lupen 7 dargestellt sind, die teilweise einen verschiedenen Aufbau haben, ist es in der Praxis selbstverständlich üblich, dass pro Brille jeweils nur eine Ausführungsvariante von Halterungen 6 zum Einsatz kommt.

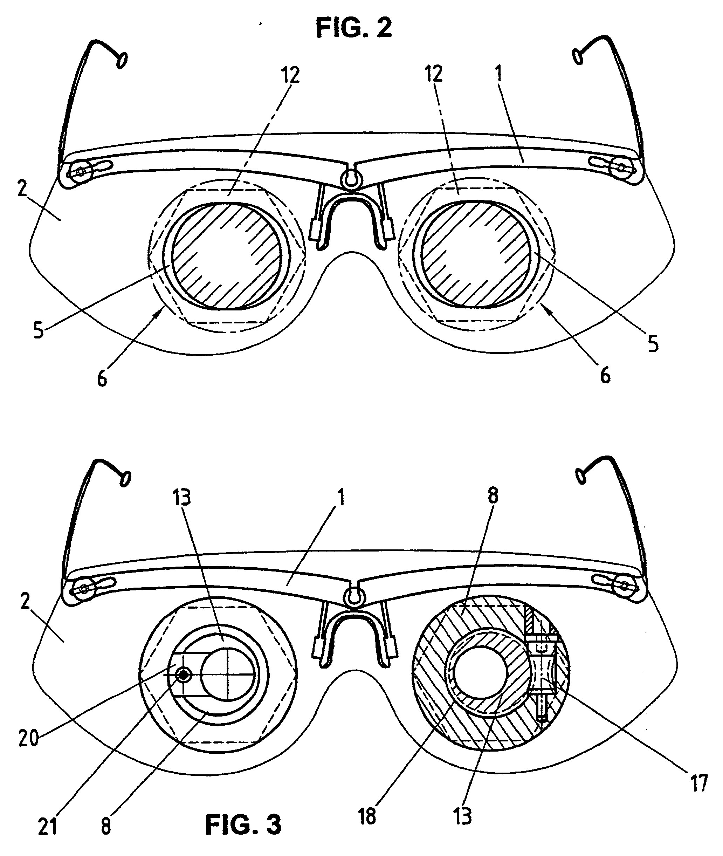

Fig. 2 zeigt eine Draufsicht auf das Brillengestell 1 mit dem darin eingesetzten Schutzschild 2. Wie bereits erwähnt, sind in den Schutzschild zwei schlitzförmige Ausnehmungen 5 eingelassen. Hierbei ist die Längsachse der schlitzförmigen Ausnehmungen 5 im wesentlichen parallel zu der Abstandsstrecke der Pupillen eines die Brille tragenden Menschen ausgerichtet. In diesen schlitzförmigen Ausnehmungen 5 sind somit die Haltemittel 6 für die Lupe 7 bei gelöster Schraubenmutter 12 in Längsrichtung verschiebbar. Dadurch lassen sich die Lupen 7 genau auf die Pupille des entsprechenden Auges des Brillenträgers ausrichten, unabhängig davon, wie gross der interpupillare Abstand dieses Brillenträgers ist. Wenn diese Einstellung erfolgt ist, kann die Schraubenmutter 12 angezogen werden, die Haltemittel für die Lupen 7 sind dann in der gewünschten Position geklemmt gehalten und somit fixiert. Wenn nun die Lupen 7 auf den interpupillaren Abstand eingestellt sind, kann das weitere hülsenförmige Element 13 bezüglich des ersten hülsenförmigen Elementes 8 jeweils so weit verdreht werden, bis sich die Lupenachsen im Bereich mit optimaler Tiefenschärfe der Lupen schneiden. Im Bereich des Schnittpunkts der beiden Lupenachsen ist der Arbeitsbereich in vergrösserter Darstellung mit der optimalen Schärfe sichtbar.

Fig. 3 zeigt eine Draufsicht auf die Brille, wie sie in Fig. 1 dargestellt ist. Linksseitig ist eine Ansicht auf die Haltemittel 6 dargestellt, wie sie in Fig. 1 mit Pfeil B angegeben ist. In Fig. 3 ist die Lupe nicht eingesetzt. Aus dieser Ansicht ist insbesondere das Plättchen 20 und die Schraube 21 ersichtlich, womit das weitere hülsenförmige Element 13 bezüglich des ersten hülsenförmigen Elementes 8 gegen Verdrehen gesichert werden kann.

Auf der rechten Seite in Fig. 3 ist eine Schnittdarstellung ersichtlich, die das in Fig. 1 auf der rechten Seite dargestellte Haltemittel 6 zeigt. Hierbei ist insbesondere die Schraube 17 ersichtlich, die im ersten hülsenförmigen Element 8 drehbar gehalten ist, und die mit einem Gewinde 18 kämmt, das über den Umfang des weiteren hülsenförmigen Elementes 13 angebracht ist, wie dies insbesondere unter Bezugnahme auf Fig. 4 bereits beschrieben worden ist.

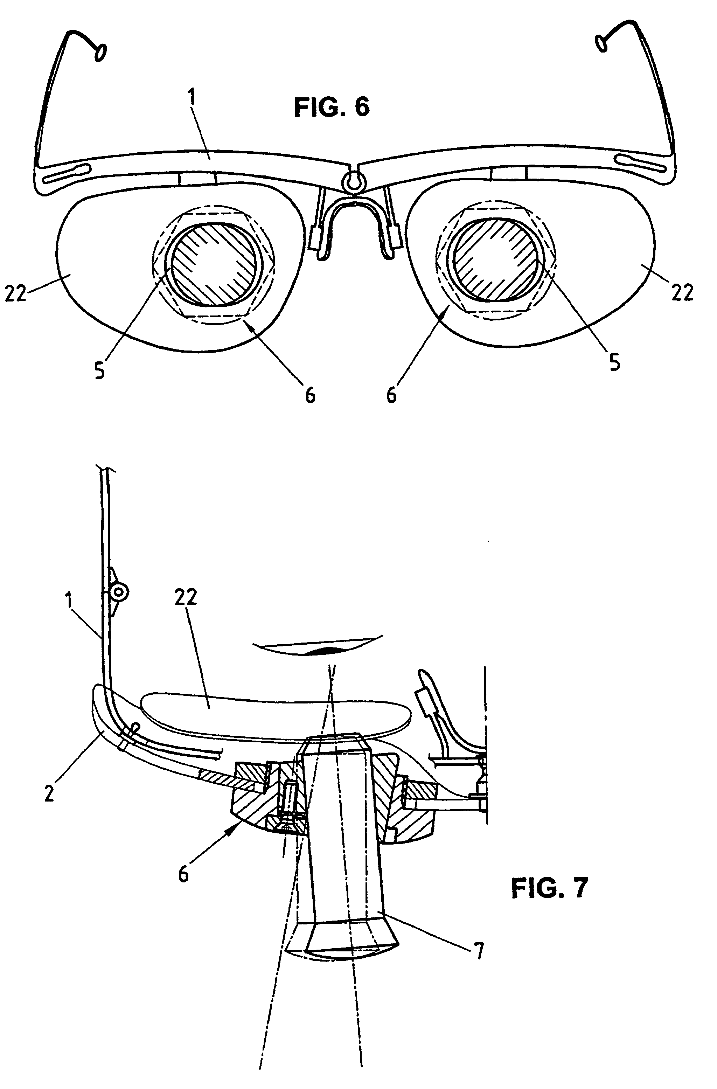

In den vorgängig beschriebenen Ausführungsformen ist jeweils das Haltemittel mit der Lupe im auf ein Brillengestell aufsetzbaren Schutzschild angebracht. Wie in Fig. 6 dargestellt ist, können die schlitzförmigen Ausnehmungen 5 auch in Brillengläser 22 angebracht werden, welche Brillengläser 22 am Brillengestell 1 befestigt sind. In diese schlitzförmigen Ausnehmungen 5 können dann, wie vorgängig beschrieben worden ist, entsprechend die Haltemittel 6 und die darin eingesetzten Lupen angebracht und eingestellt werden. Die Brillengläser 22 können hierbei unkorrigierte Gläser sein, sie können aber auch als sehfehlerkorrigierende Gläser ausgebildet sein. Damit wird der Vorteil erreicht, dass das Umfeld für den Betrachter durch diese Brillengläser wahrgenommen werden kann, wodurch auch hier eine optimale Sicht gewährleistet ist.

Wie aus Fig. 7 ersichtlich ist, lässt sich der Schutzschild 2, in welchem die Lupen 7 in der vorher beschriebenen Art gehalten sind, auch auf ein Brillengestell 2 aufsetzen, an welchem bereits Brillengläser 22 befestigt sind. Dies hat insbesondere den Vorteil, dass nach der Wegnahme des Schutzschildes 2 mit den darin gehaltenen Lupen 7 der Brillenträger eine normale Brille trägt, die mit den einen Sehfehler korrigierenden Gläsern ausgestattet ist. Durch die Möglichkeit der Längsverschiebung der Lupen 7 können diese somit so verschoben werden, dass sie auf den Brillengläsern 22 aufliegen. Wenn nur ein Schutzschild 2 mit den darin enthaltenen Lupen oder nur Brillengläser 22 mit entsprechend darin gehaltenen Lupen 7 verwendet werden, können die Lupen durch Längsverschiebung in einen optimalen Abstand vom Auge verschoben werden.

Mit dieser erfindungsgemässen Brille mit Lupen wird gewährleistet, dass die Lupen in optimaler Weise auf die Augen des Brillenträgers eingestellt werden können, wobei eine freie Sicht auf die Umgebung optimal möglich ist. Des weiteren können jeweils die Lupen in einfacher Weise ausgetauscht werden, durch die Vielfalt der Möglichkeiten des Anbringens der Lupen auf den Brillengläsern oder auf einem Schutzschild werden auch in dieser Hinsicht wesentliche Verbesserungen gegenüber bekannten derartigen Brillen erreicht.

## Patentansprüche

1. Lupenbrille bestehend aus einem Brillengestell (1), Lupen (7), mindestens einem als Brillenglas wirkenden transparenten Element (2; 22), welches in das Brillengestell eingesetzt ist, und mindestens einem Haltemittel (6), in welchem jeweils eine Lupe (7) angeordnet ist, bei der jeweils als Haltemittel (6) eine im transparenten Element (2; 22) angebrachte, durchgehende schlitzförmige Ausnehmung (5), deren Längsachse im wesentlichen parallel zur Abstandstrecke der Pupillen eines die Brille tragenden Menschen ausgerichtet ist, und in welche schlitzförmige Ausnehmung (5) die Lupe (7) eingesetzt und in Längsachsenrichtung dieser schlitzförmigen Ausnehmung (5) verschiebbar ist, und ein Klemmittel (10, 11, 12) dienen, mit welchem die Lupe (7) in der schlitzförmigen Ausnehmung (5) des transparenten Elementes (2; 22) in eingestellter Position klemmend gehalten ist, **dadurch gekennzeichnet, dass** das Klemmittel durch ein erstes hülsenförmiges Element (8) mit einem Flansch (10) und einem Gewindeteil (11) sowie durch eine Schraubenmutter (12) gebildet ist, wobei der Flansch (10) auf der einen Seite des transparenten Elements (2; 22) abgestützt ist und der Gewindeteil (11) durch die schlitzförmige Ausnehmung (5) hindurchragt, und der Flansch (10) mittels der Schraubenmutter (12), die auf den Gewindeteil (11) aufgeschraubt ist und auf der anderen Seite des transparenten Elements (2; 22) abgestützt ist, gegen das transparente Element (2; 22) gepreßt wird.

2. Brille nach Anspruch 1, **dadurch gekennzeichnet, dass** das erste hülsenförmige Element (8) mit einer durchgehenden Bohrung (9) ausgestattet ist, in welche die Lupe (7) eingesetzt ist.

3. Brille nach Anspruch 2, **dadurch gekennzeichnet, dass** koaxial in das erste hülsenförmige Element (8) ein weiteres hülsenförmiges Element (13) eingesetzt ist, das bezüglich des ersten hülsenförmigen Elements (8) um eine Drehachse (14) verdrehbar ist, und dass das weitere hülsenförmige Element (13) eine weitere durchgehende Bohrung (15) aufweist, deren Achse (16) bezüglich der Drehachse (14) um einen Winkel (α) geneigt ist, und dass die Lupe (7) in diese weitere durchgehende Bohrung (15) des weiteren hülsenförmigen Elements (13) eingesetzt ist.

4. Brille nach Anspruch 3, **dadurch gekennzeichnet, dass** zum Verdrehen des weiteren hülsenförmigen Elements (13) mit der eingesetzten Lupe (7) bezüglich des ersten hülsenförmigen Elements (8) ein Verdrehmechanismus (17, 18) vorgesehen ist.

5. Brille nach einem der Ansprüche 2 bis 4, **dadurch gekennzeichnet, dass** zum Arretieren des Verdrehens des weiteren hülsenförmigen Elements (13) bezüglich des ersten hülsenförmigen Elements (8) eine Arretiereinrichtung (20, 21) vorgesehen ist.

6. Brille nach einem der Ansprüche 1 bis 5, **dadurch gekennzeichnet, dass** die Lupe (7) in Richtung ihrer Längsachse bezüglich des transparenten Elements (2; 22) verschiebbar ist.

7. Brille nach einem der Ansprüche 1 bis 6, **dadurch gekennzeichnet, dass** das transparente Element aus zwei am Brillengestell (1) befestigten Brillengläsern (22) besteht, und dass jedes Brillenglas (22) mit einer schlitzförmigen Ausnehmung (5) zur Aufnahme von jeweils einer Lupe (7) versehen ist.

8. Brille nach einem der Ansprüche 1 bis 6, **dadurch gekennzeichnet, dass** das transparente Element aus einem am Brillengestell (1) befestigten Schutzschild (2) besteht, und dass der Schutzschild (2) mit zwei schlitzförmigen Ausnehmungen (5) zur Aufnahme von jeweils einer Lupe (7) versehen ist.

9. Brille nach Anspruch 8, **dadurch gekennzeichnet, dass** der Schutzschild (2) mit den beiden darin eingesetzten Lupen (7) auf ein Brillengestell (1) gesetzt ist, an welchem zwei Brillengläser (22) befestigt sind.

10. Anspruch nach einem der Ansprüche 7 bis 9, **dadurch gekennzeichnet, dass** die Brillengläser (22) Sehfehler korrigierende Brillengläser sind.

## Claims

1. Magnifying spectacles, comprising an eyeglass frame (1), magnifying lenses (7), at least one transparent element (2; 22) acting as eyeglass lens, which element is inserted in the eyeglass frame, and at least one holding means (6) in which a magnifying lens (7) is disposed in each case, in which, serving in each case as the holding means (6) are a continuous slot-shaped recess (5) made in the transparent element (2; 22), the longitudinal axis of which recess is aligned substantially parallel to the imaginary line of spacing between the pupils of a human being wearing the spectacles, and in which slot-shaped recess (5) the magnifying lens (7) is inserted and is displaceable in longitudinal axial direction of this slot-shaped recess (5), and a clamping means (10, 11, 12), with which the magnifying lens (7) is held, clamped, in adjusted position in the slot-shaped recess (5) of the transparent element (2; 22), **characterised in that** the clamping means is formed by a first sleeve-shaped element (8) with a flange (10) and a threaded part (11) as well as by a screw nut (12), the flange (10) being supported on the one side of the transparent element (2; 22) and the threaded part (11) projecting through the slot-shaped recess (5), and the flange (10) being pressed against the transparent element (2; 22) by means of the screw nut (12), which is screwed on the threaded part (11) and is supported on the other side of the transparent element (2; 22).

2. Spectacles according to claim 1, **characterised in that** the first sleeve-shaped element (8) is provided with a continuous bore (9) in which the magnifying lens (7) is inserted.

3. Spectacles according to claim 2, **characterised in that** a further sleeve-shaped element (13), which is rotatable with respect to the first sleeve-shaped element (8) about a rotational axis (14), is inserted coaxially in the first sleeve-shaped element (8), and **in that** the further sleeve-shaped element (13) has a further continuous bore (15), the axis (16) of which is inclined with respect to the rotational axis (14) by an angle (α), and **in that** the magnifying lens (7) is inserted into this further continuous bore (15) of the further sleeve-shaped element (13).

4. Spectacles according to claim 3, **characterised in that** a rotation mechanism (17, 18) is provided for rotation of the further sleeve-shaped element (13), with the inserted magnifying lens (7), with respect to the first sleeve-shaped element (8).

5. Spectacles according to one of the claims 2 to 4, **characterised in that** a stop device (20, 21) is provided to stop the rotation of the further sleeve-shaped element (13) with respect to the first sleeve-shaped element (8).

6. Spectacles according to one of the claims 1 to 5, **characterised in that** the magnifying lens (7) is displaceable in the direction of its longitudinal axis with respect to the transparent element (2; 22).

7. Spectacles according to one of the claims 1 to 6, **characterised in that** the transparent element comprises two eyeglass lenses (22) mounted on the eyeglass frame (1), and **in that** each eyeglass lens (22) is provided with a slot-shaped recess (5) for receiving in each case a magnifying lens (7).

8. Spectacles according to one of the claims 1 to 6, **characterised in that** the transparent element comprises a protective shield (2) mounted on the eyeglass frame (1), and **in that** the protective shield (2) is provided with two slot-shaped recesses (5) for receiving in each case a magnifying lens (7).

9. Spectacles according to claim 8, **characterised in that** the protective shield (2), with the two magnifying lenses (7) inserted therein, is placed on an eyeglass frame (1) on which two eyeglass lenses (22) are mounted.

10. Spectacles according to one of the claims 7 to 9, **characterised in that** the eyeglass lenses (22) are prescription lenses.

## Revendications

1. Lunette-loupe se composant d'une monture de lunette (1), de loupes (7), d'au moins un élément transparent (2; 22) agissant comme un verre de lunette, lequel est inséré dans la monture, et d'au moins un moyen de retenue (6), dans lequel est disposée respectivement une loupe (7), pour laquelle est utilisé respectivement comme moyen de retenue (6) un évidement (5) en forme de fente ménagé dans l'élément transparent (2; 22), évidement dont l'axe longitudinal est orienté sensiblement parallèlement à l'espacement des pupilles d'un être humain portant les lunettes et évidement en forme de fente (5) dans lequel est insérée la loupe (7) qui est mobile dans le sens de l'axe longitudinal de cet évidement en forme de fente (5), et comprenant un moyen de serrage (10, 11, 12), avec lequel la loupe (7) est maintenue dans l'évidement en forme de fente (5) de l'élément transparent (2; 22) en position réglée de serrage, **caractérisée en ce que** le moyen de serrage est formé par un premier élément (8) en forme de manchon avec une bride (10) et un partie filetée (11) ainsi que par un écrou fileté (12), la bride (10) prenant appui sur un côté de l'élément transparent (2; 22) et la partie filetée (11) faisant saillie par l'évidement (5) en forme de fente et la bride (10) étant pressée contre l'élément transparent (2; 22) au moyen de l'écrou vissé (12) qui est vissé sur la partie filetée (11) et qui s'appuie de l'autre côté de l'élément transparent (2; 22).

2. Lunette selon la revendication 1, **caractérisée en ce que** l'élément en forme de manchon (8) est muni d'un perçage continu (9), dans lequel est insérée la loupe (7).

3. Lunette selon la revendication 2, **caractérisé en ce que** dans le premier élément en forme de manchon (8) est inséré coaxialement un autre élément en forme de manchon (13) qui est rotatif autour d'un axe de rotation (14) par rapport au premier élément en forme de manchon (13) et **en ce que** l'autre élément en forme de manchon présente un autre perçage continu (15) dont l'axe (16) est incliné en formant un angle (α) par rapport à l'axe de rotation (14) et **en ce que** la loupe (7) est insérée dans cet autre perçage continu (15) de l'autre élément en forme de manchon (13).

4. Lunette selon la revendication 3, **caractérisée en ce que** pour la rotation de l'autre élément en forme de manchon (13) avec la loupe insérée (7) par rapport au premier élément en forme de manchon (8), il est prévu un mécanisme de rotation (17, 18).

5. Lunette selon l'une des revendications 2 à 4, **caractérisée en ce que** pour le blocage de la rotation de l'autre élément en forme de manchon (13) par rapport au premier élément en forme de manchon (8), il est prévu un dispositif de blocage (20, 21).

6. Lunette selon l'une des revendications 1 à 5, **caractérisée en ce que** la loupe (7) est mobile en direction de son axe longitudinal par rapport à l'élément transparent (2; 22).

7. Lunette selon l'une des revendications 1 à 6, **caractérisée en ce que** l'élément transparent se compose de deux verres de lunettes (22) fixés sur la monture de lunette (1) et **en ce que** chaque verre de lunette (22) est muni d'un évidement en forme de fente (5) pour le logement de respectivement une loupe (7).

8. Lunette selon l'une des revendications 1 à 6, **caractérisée en ce que** l'élément transparent se compose d'un écran de protection (2) fixé sur la monture de lunette (1) et **en ce que** l'écran de protection (2) est muni de deux évidements en forme de fente (5) pour le logement respectif d'une loupe (7).

9. Lunette selon la revendication 8, **caractérisée en ce que** l'écran de protection (2) avec les deux loupes insérées (7) est placé sur une monture de lunette (1), sur laquelle sont fixés deux verres de lunette (22).

10. Lunette selon l'une des revendications 7 à 9, **caractérisée en ce que** les verres de lunette (22) sont des verres correcteurs de vue.
